# EUROPÄISCHE PATENTSCHRIFT

(11) **EP 3 307 496 B1**
(45) Veröffentlichungstag und Bekanntmachung des Hinweises auf die Patenterteilung: **15.05.2019**
(21) Anmeldenummer: 16728929.7
(22) Anmeldetag: 09.06.2016
(51) Int. Cl.: B25J 19/00

(54) **LEITUNGSFUEHRUNGSVORRICHTUNG EINES INDUSTRIEROBOTERS**
LINE GUIDING DEVICE OF AN INDUSTRIAL ROBOT
DISPOSITIF DE GUIDAGE DE LIGNE D'UN ROBOT INDUSTRIEL

(30) Priorität: 09.06.2015 DE 102015210570
(43) Veröffentlichungstag der Anmeldung: 18.04.2018
(73) Patentinhaber: KUKA Deutschland GmbH, 86165 Augsburg (DE)
(72) Erfinder: NASRADINI, Melina, 86163 Augsburg (DE); KURMYSHKIN, Vladimir, 86368 Gersthofen (DE); KARLINGER, Stefan, 86199 Augsburg (DE); HEITZ, Jürgen, 86707 Westendorf (DE); ROHÉ, Frank, 86368 Gersthofen (DE)
(74) Vertreter: Ege Lee & Partner Patentanwälte PartGmbB
(86) Internationale Anmeldenummer: PCT/EP2016/063128
(87) Internationale Veröffentlichungsnummer: WO 2016/198509

(56) Entgegenhaltungen:
- EP-A1- 1 369 211
- EP-A1- 2 392 436
- DE-U1- 20 112 491
- DE-U1-202004 021 177

## Beschreibung

Die Erfindung betrifft eine Leitungsführungsvorrichtung zum Führen mindestens einer Versorgungsleitung entlang eines Roboterarms. Die Erfindung betrifft außerdem einen zugehörigen Industrieroboter.

Die DE 20 2004 021 177 U1 beschreibt eine Vorrichtung zum Führen eines zumindest eine Versorgungsleitung aufweisenden Schlauches eines Industrieroboters, mit einem Führungselement, in welchem der Schlauch beweglich gegen die Rückstellkraft eines Rückstellelements führbar ist, wobei das Führungselement einen axialen Führungsabschnitt für eine Führung des Schlauches in dessen Längsrichtung sowie einen sich an den Führungsabschnitt anschließenden durch ein Gehäuse gebildeten Ausgleichsabschnitt aufweist, der derart ausgebildet ist, dass im Gehäuse ein in Bezug auf die Längsrichtung seitliches Umlenken der Versorgungsleitung über ein axiales Teilstück hinweg ermöglicht ist. Das Führungselement ist aufklappbar ausgebildet und eingangsseitig ist der Schlauch von einem Widerlager für das Rückstellelement umgeben, das in das Führungselement oder einen Befestigungsklemmblock eingelegt ist.

Aus der DE 10 2009 056 454 B4 ist eine Energiezuführungsvorrichtung für Industrieroboter bekannt, aufweisend ein Tragbauteil, eine Energiezuführungsleitung mit einem feststehenden Leitungsabschnitt, einen Ausgleichsabschnitt und einem ausziehbaren Leitungsabschnitt, einen Halter zum Befestigen des feststehenden Leitungsabschnitts an dem Tragbauteil, eine Führung zum radialen Lagern des ausziehbaren Leitungsabschnitts bezüglich des Tragbauteils und eine Versteifungstraverse, welche den Halter mit der Führung verbindet und zusammen mit dem Halter und der Führung als Verbundbauteil ausgebildet ist.

Aufgabe der Erfindung ist es, eine verbesserte Leitungsführungsvorrichtung für eine Versorgungsleitung eines Industrieroboters zu schaffen.

Diese Aufgabe wird erfindungsgemäß gelöst durch eine Leitungsführungsvorrichtung zum Führen mindestens einer Versorgungsleitung entlang eines Roboterarms, aufweisend:
- eine Versorgungsleitung,
- eine Federvorrichtung, die ausgebildet ist, die Versorgungsleitung mittels Federkraft selbsttätig aus einem ausgezogenen Zustand der Versorgungsleitung in einen eingezogenen Zustand der Versorgungsleitung zurückzuführen, und die einen in Auszugsrichtung der Versorgungsleitung vorderen Endabschnitt und einen in Auszugsrichtung der Versorgungsleitung hinteren Endabschnitt aufweist,

- einen mit der Versorgungsleitung fest verbundenen Federvorrichtungssitz, an dem der hintere Endabschnitt der Federvorrichtung gelagert ist,
- einen Gegenlagersitz, an dem der vordere Endabschnitt der Federvorrichtung gelagert ist,
- eine Befestigungsvorrichtung, die ausgebildet ist, die Leitungsführungsvorrichtung an einem Glied des Roboterarms zu befestigen, und
- eine den Gegenlagersitz tragende Verstellvorrichtung, die ausgebildet ist, den Gegenlagersitz bezüglich der Befestigungsvorrichtung beweglich zu lagern, wobei die Verstellvorrichtung eine Rückstelleinrichtung aufweist, die ausgebildet ist, den Gegenlagersitz aus einer ausgelenkten Position des Gegenlagersitzes in eine Grundposition des Gegenlagersitzes zurückzuführen.

Der Roboterarm kann mehrere, durch wenigstens drei Gelenke verbundene Glieder aufweisen.

Die Versorgungsleitung kann beispielsweise einen Schutzschlauch aufweisen, welcher ein oder mehrere Einzelleitungen umfasst, die für die Versorgung von Robotern und/oder deren geführte Werkzeuge, beispielsweise mit elektrischer Energie, Hydraulikfluid, Öl, Wasser und/oder Druckluft ausgebildet sind. Eine solche Versorgungsleitung kann Teil einer so genannten Energiezuführung sein. Die Versorgungsleitung der Energiezuführung wird im Allgemeinen durch einen Durchlass gezogen, um in Nähe des Roboterarms diese Leitungen in eine gewünschte Position zu bringen. Die Versorgungsleitung kann mittels einer Federvorrichtung wieder zurückgezogen werden, damit keine durchhängenden Leitungen den Arbeitsbereich des Roboterarms stören. Eine erhöhte Beweglichkeit in allen Raumrichtungen kann durch die erfindungsgemäße Leitungsführungsvorrichtung erreicht werden.

Die Federvorrichtung kann wahlweise aktiv oder passiv arbeiten. Im Falle einer passiven Zurückführung eines ausgezogenen Leitungsabschnitts kann die Federvorrichtung beispielsweise zumindest eine Federwendel aufweisen, die im eingezogenen Zustand der Versorgungsleitung entspannt ist oder zumindest nahezu entspannt ist und im ausgezogenen Zustand unter Federspannung steht, so dass bei einem Wegfall einer externen Zugkraft auf die Versorgungsleitung die Federwendel sich entspannt und dabei die Versorgungsleitung in den eingezogenen Zustand zurückbewegt wird. Vorzugsweise kann die Federvorrichtung bzw. die Federwendel parallel bzw. koaxial zur Versorgungsleitung angeordnet sein. Dadurch kann die Änderung der Längserstreckung der Federvorrichtung zwischen dem eingezogenen Zustand und dem ausgezogenen Zustand in einer Richtung parallel zur Längserstreckung der Versorgungsleitung erfolgen. Insbesondere ist die Versorgungsleitung zumindest bereichsweise von der Federvorrichtung umfangen bzw. umgeben bzw. umhüllt. Alternativ oder zusätzlich zu einer Federwendel oder mehreren Federwendeln kann auch zumindest ein pneumatisches Federelement vorgesehen sein.

Alternativ kann die Federvorrichtung aktiv ausgebildet sein. Dies bedeutet, dass die Längserstreckung der Federvorrichtung durch zumindest einen Aktor steuerbar bzw. regelbar ist. Als Aktor können Motoren, pneumatische oder hydraulische Antriebe vorgesehen sein. Der zumindest eine Aktor kann auf Grundlage einer an der Versorgungsleitung anliegenden Zugspannung gesteuert bzw. geregelt werden. Alternativ oder zusätzlich kann der Aktor auch auf Grundlage der Pose des Roboters gesteuert bzw. geregelt werden. Dadurch wird die Position bzw. der Auszug der Versorgungsleitung aktiv steuerbar, insbesondere mittels der Robotersteuerung, die auch die Bewegungen des Roboters steuert.

Die Befestigungsvorrichtung ist dazu vorgesehen, die erfindungsgemäße Leitungsführungsvorrichtung an einem Glied des Roboterarms oder eines mit dem Roboterarm verbundenen Anbauteil zu lagern und/oder zu befestigen. Mittels der Befestigungsvorrichtung trägt der Roboterarm oder dessen Anbauteil die gesamte Leitungsführungsvorrichtung. Die Befestigungsvorrichtung kann demgemäß ein anzuschraubender Flansch oder ein Träger sein, der mit dem Glied des Roboterarms oder dem Anbauteil verbunden wird, insbesondere fest verschraubt wird.

Die Verstellvorrichtung schafft eine Beweglichkeit des Gegenlagersitzes bezüglich desjenigen Gliedes des Roboterarms oder desjenigen Anbauteils, an dem die Befestigungsvorrichtung die Leitungsführungsvorrichtung anflanscht. Die Verstellvorrichtung kann insbesondere passiv beweglich sein. In einer bevorzugten Ausführungsform ist die Verstellvorrichtung ausgebildet, den Gegenlagersitz unmittelbar durch diejenige Kraft zu bewegen bzw. zu verstellen, welche eine Auszugsbewegung der Versorgungsleitung verursacht. Die Verstellvorrichtung kann demgemäß zumindest weitgehend oder sogar vollständig durch Querkräfte bewegt werden, welche insbesondere durch eine Zugkraft an dem freien Ende der Versorgungsleitung, beispielsweise bei einer Drehung des Befestigungsflansches des Industrieroboters, an dem das freie Ende der Versorgungsleitung festgelegt ist, quer zur Auszugsrichtung auftreten.

Der hintere Endabschnitt der Federvorrichtung ist an dem mit der Versorgungsleitung fest verbundenen Federvorrichtungssitz gelagert. Der Federvorrichtungssitz kann beispielsweise von einem zweiteiligen Kunststoffring gebildet werden, der zwei Halbschalenkörper aufweist, die gegeneinander verschraubt sind und dadurch der Kunststoffring an einem Schutzschlauch der Versorgungsleitung befestigt ist.

Der Federvorrichtungssitz bzw. der Kunststoffring kann einen Sitz oder Anschlag aufweisen, an dem sich der Endabschnitt der Federvorrichtung abstützt. Ein solches Abstützen kann wenigstens durch eine Fixierung einer Federwendel der Federvorrichtung in axialer Richtung, d.h. entgegen der Auszugsrichtung erfolgen. Der hintere Endabschnitt der Federvorrichtung bzw. der hintere Endabschnitt der Federwendel kann damit bezüglich der Versorgungsleitung, insbesondere bezüglich des Schutzschlauches festgelegt sein. Der hintere Endabschnitt der Federvorrichtung bzw. der hintere Endabschnitt der Federwendel kann dabei bezüglich des Federvorrichtungssitzes entweder um eine axiale Achse drehbar gelagert sein oder an dem Federvorrichtungssitz starr befestigt sein. Statt eines Federvorrichtungssitzes mit Sitz oder Anschlag bzw. eines Kunststoffrings mit Sitz oder Anschlag, kann der Federvorrichtungssitz bzw. der Kunststoffring auch ohne besonderem Sitz oder Anschlag ausgebildet sein. Beispielsweise kann der Federvorrichtungssitz bzw. der Kunststoffring als ein dem Fachmann als solches bekannter Protektor ausgebildet sein.

Der vordere Endabschnitt der Federvorrichtung ist an dem Gegenlagersitz gelagert. Durch den Gegenlagersitz hindurch kann die Versorgungsleitung, insbesondere zusammen mit dem Schutzschlauch aus- und einziehbar, also verschiebbar gelagert sein. Beispielsweise kann der Gegenlagersitz von einem Kugelgelenksring gebildet werden, welcher zumindest in axialer Richtung starr, ggf. aber um einen gewissen Winkel schwenkbar in einem Kugelgelenkssitz gelagert ist. Der Kugelgelenksring kann aber auch völlig starr mit dem Kugelgelenkssitz verbunden sein. Allerdings ist der Gegenlagersitz und gegebenenfalls auch der Kugelgelenkssitz bezüglich desjenigen Gliedes des Industrieroboters verstellbar, insbesondere elastisch verstellbar gelagert, an welchem die gesamte Leitungsführungsvorrichtung gelagert bzw. befestigt ist.

In einem bevorzugten Ausführungsbeispiel ist die Rückstelleinrichtung der Verstellvorrichtung ausgebildet, den Gegenlagersitz mittels Federkraft selbsttätig aus einer ausgelenkten Position des Gegenlagersitzes in eine Grundposition des Gegenlagersitzes zurückzuführen.

Die Rückstelleinrichtung kann zumindest in Auszugsrichtung der Versorgungsleitung eine Federsteifigkeit aufweisen, die größer ist, als eine Federsteifigkeit der Federvorrichtung. Die Rückstelleinrichtung oder ein separates Federglied, bzw. inhärent ein Wellschlauch, kann zumindest in Auszugsrichtung der Versorgungsleitung eine Federsteifigkeit aufweisen, die größer ist, als eine Federsteifigkeit der Federvorrichtung bzw. der Federwendel. Im Falle eines Wellschlauches oder Wellrohres kann dieses in Richtung seiner axialen Erstreckung zumindest weitgehend starr ausgebildet sein, jedoch dabei in einer zu seiner axialen Erstreckung senkrechten Richtung, bzw. in Querrichtung flexibel ausgebildet sein.

Die Rückstelleinrichtung oder das separate Federglied, bzw. inhärent der Wellschlauch, kann in Auszugsrichtung der Versorgungsleitung zumindest weitergehend oder vollständig starr ausgebildet sein, wo hingegen die Rückstelleinrichtung in wenigstens einer zur Auszugsrichtung der Versorgungsleitung senkrechten Richtung, bzw. in Querrichtung beweglich, insbesondere federelastisch beweglich, insbesondere selbstrückstellend ausgebildet sein kann.

Die Rückstelleinrichtung kann in Auszugsrichtung der Versorgungsleitung zumindest weitergehend oder vollständig starr ausgebildet sein. Eine zumindest weitgehend starre Ausbildung der Rückstelleinrichtung in Richtung ihrer axialen Erstreckung ist dadurch gekennzeichnet, dass die Steifigkeit der Rückstelleinrichtung in axialer Richtung zumindest größer ist, als die Steifigkeit, d.h. die Federsteifigkeit der Federwendel, bzw. der Federvorrichtung allgemein. Der Rückstelleinrichtung soll demgemäß in axialer Richtung weniger elastisch sein, als die Federvorrichtung bzw. die Federwendel.

Die Rückstelleinrichtung kann in wenigstens einer zur Auszugsrichtung der Versorgungsleitung senkrechten Richtung beweglich, insbesondere federelastisch beweglich ausgebildet sein.

Die Verstellvorrichtung kann von einem die Federvorrichtung umgebenden Wellschlauch gebildet werden, der ein mit der Befestigungsvorrichtung verbundenes festes Wellschlauchende aufweist und ein dem festen Wellschlauchende gegenüberliegendes, freies Wellschlauchende aufweist, an dem der Gegenlagersitz befestigt ist.

Der Wellschlauch kann in Richtung seiner axialen Erstreckung zumindest weitgehend starr ausgebildet sein, jedoch in einer zu seiner axialen Erstreckung senkrechten Richtung flexibel ausgebildet sein. Eine zumindest weitgehend starre Ausbildung des Wellschlauches in Richtung seiner axialen Erstreckung ist dadurch gekennzeichnet, dass die Steifigkeit des Wellschlauches in axialer Richtung zumindest größer ist, als die Steifigkeit, d.h. die Federsteifigkeit der Federwendel, bzw. der Federvorrichtung allgemein. Der Wellschlauch soll demgemäß in axialer Richtung weniger elastisch sein, als die Federvorrichtung bzw. die Federwendel.

Mittels der Verstellvorrichtung, insbesondere mittels des Wellschlauches kann der Gegenlagersitz, der einen Kugelgelenksring und einen Kugelgelenkssitz aufweisen kann, bezüglich der Befestigungsvorrichtung beweglich gelagert sein. Die Verstellvorrichtung kann demgemäß zumindest weitgehend oder sogar vollständig durch Querkräfte bewegt werden, welche insbesondere durch eine Zugkraft an dem freien Ende der Versorgungsleitung, beispielsweise bei einer Drehung des Befestigungsflansches des Industrieroboters, an dem das freie Ende der Versorgungsleitung festgelegt ist, quer zur Auszugsrichtung auftreten. Die Verstellvorrichtung kann dabei ausgebildet sein, zumindest tendenziell die Leitungsführungsvorrichtung, insbesondere die Federvorrichtung in Richtung der Auszugsrichtung zu schwenken oder zu drehen. Sowohl eine Bewegung der Verstellvorrichtung aus einer Grundposition in eine Auslenkungsposition kann alleine aufgrund dieser Querkräfte erfolgen, als auch eine Bewegung der Verstellvorrichtung aus der Auslenkungsposition in die Grundposition kann alleine aufgrund dieser Querkräfte erfolgen. Alternativ kann eine Bewegung der Verstellvorrichtung aus der Auslenkungsposition in die Grundposition durch eine separate Rückstellkraft erfolgen.

Zur Erzeugung einer solchen Rückstellkraft kann erfindungsgemäß die Rückstelleinrichtung vorgesehen sein. Die Rückstelleinrichtung kann beispielsweise ein separates Federglied aufweisen, das ausgebildet ist, den Gegenlagersitz aus einer ausgelenkten Position des Gegenlagersitzes in eine Grundposition des Gegenlagersitzes zurückzuführen. Alternativ kann beispielsweise der Wellschlauch der Verstellvorrichtung federelastisch sein, um den Gegenlagersitz aus einer ausgelenkten Position des Gegenlagersitzes in eine Grundposition des Gegenlagersitzes zurückzuführen. In diesem Falle kann also der Wellschlauch aus einem Material hergestellt sein und/oder eine Gestalt aufweisen, wodurch der Wellschlauch eine inhärente Rückstelleigenschaft, insbesondere Elastizität erhält. Der Wellschlauch kann beispielsweise aus Kunststoff oder aus Metall hergestellt sein.

Der mit der Versorgungsleitung fest verbundene Federvorrichtungssitz kann in axialer Längserstreckung des Wellschlauches verstellbar innerhalb des Wellschlauches geführt sein.

Der Federvorrichtungssitz kann dazu an seinem Außenmantel eine Gleitfläche aufweisen, welche ausgebildet ist, entlang der Innenmantelwand des Wellschlauches in axialer Richtung zu gleiten. Wenn also die Versorgungsleitung in Auszugsrichtung herausgezogen wird, dann wird der Federvorrichtungssitz aus einer hinteren Position nach vorne bewegt. Die Innenmantelwand des Wellschlauches bildet insoweit eine Gleitschiebeführung für der Federvorrichtungssitz.

Die Rückstelleinrichtung kann durch eine flexible Ausgestaltung des Wellschlauches gebildet werden.

Das freie Wellschlauchende des Wellschlauches kann außenumfangsseitig mit einer Stoßdämpfungseinrichtung versehen sein.

Die Stoßdämpfungseinrichtung kann einteilig mit dem Kugelgelenkssitz ausgebildet sein. Die Stoßdämpfungseinrichtung bzw. der Kugelgelenkssitz kann dabei ausgebildet sein, das freie Wellschlauchende und/oder den Gegenlagersitz vor Beschädigung zu schützen, wenn es während eine Bewegung der Leitungsführungsvorrichtung beispielsweise gegen ein Glied des Industrieroboters schlägt. Die Stoßdämpfungseinrichtung bzw. der Kugelgelenkssitz kann dazu aus einem elastischen Kunststoff hergestellt sein. Die Stoßdämpfungseinrichtung bzw. der Kugelgelenkssitz kann insbesondere zum nachträglichen Austauschen bzw. Ersetzen ausgebildet sein.

Die Aufgabe der Erfindung wird außerdem gelöst durch einen Industrieroboter aufweisend eine Robotersteuerung, die ausgebildet und/oder eingerichtet ist, ein Roboterprogramm auszuführen, sowie aufweisend einen Roboterarm mit Gelenken, die gemäß des Roboterprogramms automatisiert oder in einem Handfahrbetrieb automatisch verstellbar sind, und aufweisend wenigstens eine erfindungsgemäße Leitungsführungsvorrichtung mit einem oder mehreren Merkmalen der Leitungsführungsvorrichtung, wie beschrieben.

Zusammenfassend und auch mit anderen Worten beschrieben ist erfindungsgemäß vorgesehen, dass ein bisher starrer Anteil der Leitungsführungsvorrichtung durch einen beweglichen, insbesondere flexiblen Anteil, vorzugsweise durch einen in sich selber flexiblen Anteil ersetzt wird. Im Innenraum dieses flexiblen Anteils wird das bei allen Leitungsführungsvorrichtungen übliche Schlauchpaket, d.h. die Versorgungsleitung, gelagert und nachgeführt. Der flexible Anteil ist nur einseitig am Roboterarm befestigt, so dass die freie Seite, in der das Schlauchpaket gegengelagert ist, sich mit der Bewegung des Roboterarms am Roboterarm entlang ohne weitere zusätzliche Führungsmittel mitbewegen kann. Damit kann sich die effektive Nachführlänge der Leitungsführungsvorrichtung verlängern.

Beispielsweise kann das flexible Element ein äußeres Wellrohr sein, ähnlich demjenigen, das im Schlauchpaket enthalten ist, nur mit größerem Innendurchmesser. Der Innendurchmesser des äußeren Wellrohres muss etwas größer sein, wie der größte Außendurchmesser des Schlauchpakets, welcher normalerweise durch die Federn oder die Federhalter bestimmt wird. Das äußere Wellrohr kann aus einem flexiblen, aber festen Werkstoff hergestellt sein, so dass ein seitliches, d.h. quer zur Längsrichtung erfolgendes Bewegen, insbesondere Biegen oder Schwenken möglich ist. Dabei soll aber ein Längen unter Zugkraft nur in sehr geringem Maße möglich sein. Das äußere Wellrohr wird auf der Rückseite am Roboterarm fest gelagert und ist an der Vorderseite frei. Das innenliegende Schlauchpaket ist an der Vorderseite des äußeren Wellrohres in einem auf dem äußeren Wellrohr sitzenden Formteils so geführt, dass das innere Wellrohr frei beweglich bleibt. Die um das innere Wellrohr liegenden Federn stützen sich jedoch so ab, dass sie eine Gegenkraft über einen Federhalter, der fest am innenliegenden Wellrohr sitzt, aufbauen können, wenn das Schlauchpaket nach vorne aus dem äußeren Wellrohr herausgezogen wird. Zum Schutz der bewegten Vorderseite des äußeren Wellrohres kann eine Art Protektor, insbesondere drehbarer Protektor, d.h. eine Stoßdämpfungseinrichtung vorgesehen sein, die vorzugsweise aus einem verschleißfesten Material hergestellt ist.

Das Wellrohr kann aber ebenso ein ähnliches flexibles und längliches Element mit einem für das Schlauchpaket freien Innenraum sein, das in Längsrichtung unter Zugkraft kaum längenveränderlich ist, in seitlicher Richtung aber in einem Verhältnis von beispielsweise 5:1 bis 20:1 für den Quotient Biegeradius zu Außendurchmesser, durch eine am freien Ende quer zur Längsrichtung wirkende Kraft verformbar ist.

Wenn man den bisher starren Anteil der Leitungsführungsvorrichtung der Bewegung des Roboterarms nachführt, dann kann sich ein längerer effektiver Nachführweg einstellen. Alternativ kann die Leitungsführungsvorrichtung bei gleichbleibendem Nachführweg konstruktiv kleiner ausgeführt werden und damit leichter und kostengünstiger sein.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters mit einer erfindungsgemäßen Leitungsführungsvorrichtung für eine Versorgungsleitung des Industrieroboters;
- Fig. 2: eine perspektivische Ansicht einer alternativen Ausführungsform einer erfindungsgemäßen Leitungsführungsvorrichtung in Alleinstellung;
- Fig. 3: eine perspektivische Ansicht der Leitungsführungsvorrichtung gemäß Fig. 2 in einer aufgeschnittenen Darstellung; und
- Fig. 4: eine Teilschnittansicht durch den vorderen Endabschnitt einer Federvorrichtung der erfindungsgemäßen Leitungsführungsvorrichtung gemäß Fig.2.

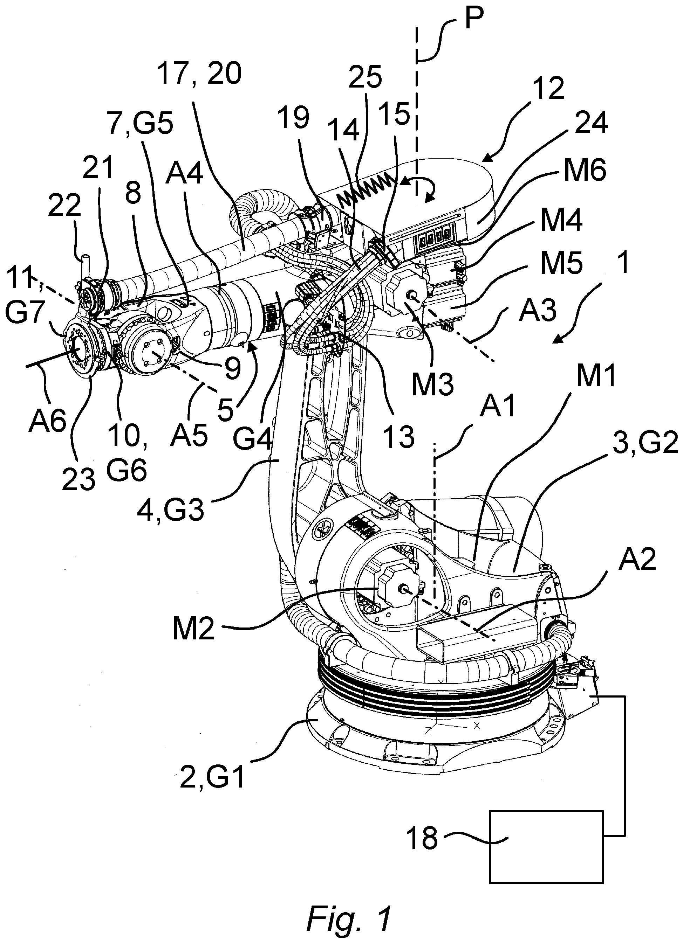

Die Fig. 1 zeigt einen Industrieroboter 1 mit einem Grundgestell 2 als erstes Glied G1, an dem ein Karussell 3 als zweites Glied G2 um eine erste vertikale Achse A1 drehbar gelagert und mittels eines ersten Antriebsmotors M1 drehangetrieben ist. Die Achsen A1-A6 des Industrieroboters 1 können u.a. auch als Gelenke A1-A6 bezeichnet werden. An dem Karussell 3 ist eine Schwinge 4 als drittes Glied G3 um eine zweite horizontale Achse A2 auf und ab schwenkbar gelagert und mittels eines zweiten Antriebsmotors M2 drehangetrieben. Die Schwinge 4 trägt einen Roboterarm 5, der um eine dritte horizontale Achse A3 auf und ab schwenkbar gelagert und mittels eines dritten Antriebsmotors M3 drehangetrieben ist. An dem Roboterarm 5, dessen Grundarm ein viertes Glied G4 bildet, ist eine vierte Achse A4 vorgesehen, welche in Längserstreckung des Roboterarmes 5 verläuft und über einen vierten Antriebsmotors M4 eine Hand 7, die einen Vorderarm des Roboterarms 5 bildet und ein fünftes Glied G5 darstellt, drehantreibt. Von der Hand 7 erstrecken sich ein erster Schenkel 8 und ein zweiter Schenkel 9 gabelförmig nach vorne. Die beiden Schenkel 8 und 9 tragen eine Lagerung für ein freies Ende 10 der Hand 7, das ein sechstes Glied G6 bildet. Die Lagerung definiert eine fünfte Achse A5 des Industrieroboters 1, um welche die Hand 7 mittels eines fünften Antriebsmotors M5 schwenkbar bewegt werden kann. Ergänzend weist die Hand 7 eine sechste Achse A6 auf, um einen Befestigungsflansch 11, der ein siebtes Glied G7 bildet, mittels eines sechsten Antriebsmotors M6 drehbar antreiben zu können.

Der Roboterarm 5 trägt eine Leitungsführungsvorrichtung 12. Die Leitungsführungsvorrichtung 12 beginnt hinter einer Anschlussplatte 13, die fest mit dem Roboterarm 5 des Industrieroboters 1 verbunden ist. Von der Anschlussplatte 13 führen Einzelleitungen 14 an eine Klemmschelle 15. Die Klemmschelle 15 klemmt die Einzelleitungen 14 fest und fixiert diese in einer festen Position bezüglich der Leitungsführungsvorrichtung 12. Ein Abschnitt eines Leitungsstrangs einer Versorgungsleitung 17 ist U-förmig in einem Gehäuse 24 der Leitungsführungsvorrichtung 12 federvorgespannt geführt. Im U-förmigen Abschnitt und austrittsseitig nach einer Haltevorrichtung 19 sind die Einzelleitungen 14 in einer gemeinsamen Versorgungsleitung 17, insbesondere durch einen Schutzschlauch 20 umgeben, zusammengefasst. Der Schutzschlauch 20 endet an einer Schelle 21, die in einem Abstand vom Roboterarm 5 mittels eines Schlauchhalters 22 gehalten ist. Der Schlauchhalter 22 ist durch einen zweiteiligen Klemmbügel 23 an dem Befestigungsflansch 11 des Industrieroboters 1 befestigt.

In einer ersten beispielhaften Ausführungsform, wie sie in der Fig. 1 gezeigt ist, kann die Versorgungsleitung 17 mittels einer innerhalb des Gehäuses 24 angeordneten, hier nur symbolisch dargestellten Federvorrichtung 25 bewegt werden. Das Gehäuse 24 kann in dieser Ausführungsform um eine mittels des Pfeiles P angedeuteten Drehachse frei hin- und herschwenken, um eine erfindungsgemäße Verstellvorrichtung zu bilden. Der Gegenlagersitz wird dabei von der Haltevorrichtung 19 gebildet. Eine erfindungsgemäße Befestigungsvorrichtung wird in diesem Fall von einer Basis eines Drehgelenks gebildet, welches das Gehäuse 24 hin- und herschwenkbar (Pfeil P) an dem Roboterarm, insbesondere an dem vierten Glied G4 lagert.

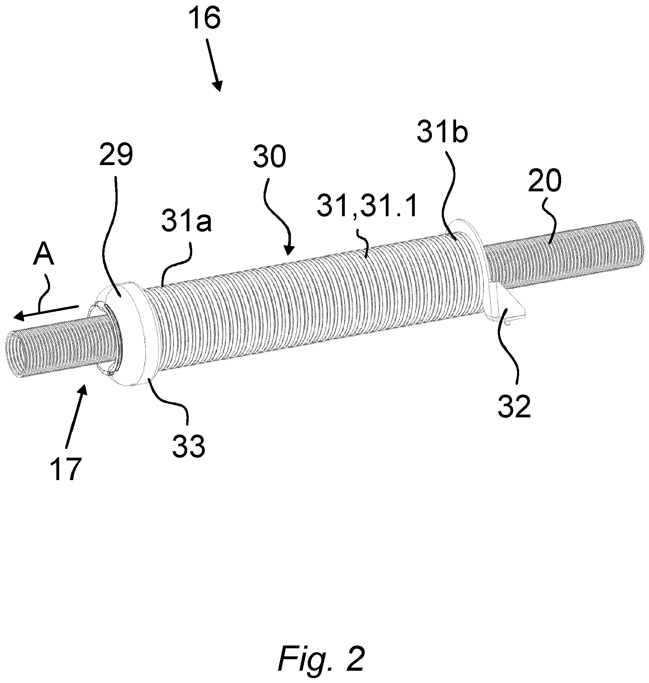

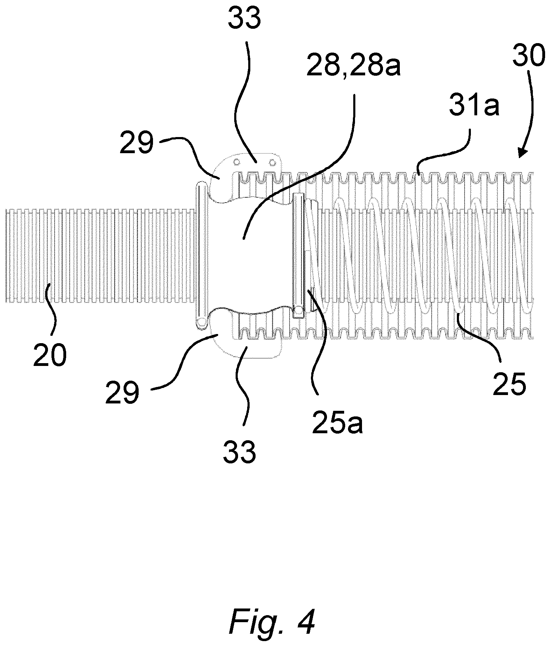

Die Figuren 2 bis 4 zeigen eine alternative Ausführungsvariante. Diese Leitungsführungsvorrichtung 16 weist die Versorgungsleitung 17 auf. Die Federvorrichtung 25 ist dabei ausgebildet, die Versorgungsleitung 17 mittels Federkraft selbsttätig aus einem ausgezogenen Zustand der Versorgungsleitung 17 in einen eingezogenen Zustand der Versorgungsleitung 17 zurückzuführen, und die einen in Auszugsrichtung A der Versorgungsleitung 17 vorderen Endabschnitt 25a und einen in Auszugsrichtung der Versorgungsleitung 17 hinteren Endabschnitt 25b aufweist.

Der hintere Endabschnitt 25b der Federvorrichtung 25 ist an einem mit der Versorgungsleitung 17 fest verbundenen Federvorrichtungssitz 26 gelagert. Der Federvorrichtungssitz 26 wird im Falle des vorliegenden Ausführungsbeispiels von einem zweiteiligen Kunststoffring gebildet, der zwei Halbschalenkörper aufweist, die gegeneinander verschraubt sind und dadurch der Kunststoffring an einem Schutzschlauch 20 der Versorgungsleitung 17 befestigt ist. Der Federvorrichtungssitz 26 bzw. der Kunststoffring weist einen Sitz oder Anschlag auf, an dem sich der Endabschnitt 25b der Federvorrichtung 25 abstützt. Ein solches Abstützen erfolgt wenigstens durch eine Fixierung einer Federwendel 27 der Federvorrichtung 25 in axialer Richtung, d.h. entgegen der Auszugsrichtung A. Der hintere Endabschnitt 25b der Federvorrichtung 25 bzw. der hintere Endabschnitt der Federwendel 27 ist damit bezüglich der Versorgungsleitung 17, insbesondere bezüglich des Schutzschlauches 20 festgelegt. Der hintere Endabschnitt 25b der Federvorrichtung 25 bzw. der hintere Endabschnitt der Federwendel 27 kann dabei bezüglich des Federvorrichtungssitzes 26 entweder um eine axiale Achse drehbar gelagert sein oder an dem Federvorrichtungssitzes 26 starr befestigt sein.

Der vordere Endabschnitt 25a der Federvorrichtung 25 ist an einem Gegenlagersitz 28 gelagert. Durch den Gegenlagersitz 28 hindurch ist die Versorgungsleitung 17, insbesondere zusammen mit dem Schutzschlauch 20 aus- und einziehbar, also verschiebbar gelagert. Im Falle des vorliegenden Ausführungsbeispiels wird der Gegenlagersitz 28 von einem Kugelgelenksring 28a gebildet, welcher zumindest in axialer Richtung starr, ggf. aber um einen gewissen Winkel schwenkbar in einem Kugelgelenkssitz 29 gelagert ist. Der Kugelgelenksring 28a kann aber auch völlig starr mit dem Kugelgelenkssitz 29 verbunden sein. Allerdings ist erfindungsgemäß der Gegenlagersitz 28, insbesondere im Falle des vorliegenden Ausführungsbeispiels der Kugelgelenksring 28a und der Kugelgelenkssitz 29, bezüglich desjenigen Gliedes G1-G7 des Industrieroboters 1, z.B. Glied G4 verstellbar, insbesondere elastisch verstellbar gelagert, an welchem die gesamte Leitungsführungsvorrichtung 16 gelagert bzw. befestigt ist.

So wird im Falle des vorliegenden Ausführungsbeispiels eine erfindungsgemäße Verstellvorrichtung 30 von einem die Federvorrichtung 25 umgebenden Wellschlauch 31 gebildet, der ein mit einer Befestigungsvorrichtung 32 verbundenes festes Wellschlauchende 31b aufweist und ein dem festen Wellschlauchende 31b gegenüberliegendes freies Wellschlauchende 31a aufweist, an dem der Gegenlagersitz 28, bzw. der Kugelgelenksring 28a und der Kugelgelenkssitz 29 befestigt ist. Der Wellschlauch 31 ist in Richtung seiner axialen Erstreckung zumindest weitgehend starr ausgebildet, jedoch in einer zu seiner axialen Erstreckung senkrechten Richtung flexibel ausgebildet. Eine zumindest weitgehend starre Ausbildung des Wellschlauches 31 in Richtung seiner axialen Erstreckung ist dadurch gekennzeichnet, dass die Steifigkeit des Wellschlauches 31 in axialer Richtung zumindest größer ist, als die Steifigkeit, d.h. die Federsteifigkeit der Federwendel 27, bzw. der Federvorrichtung 25 allgemein. Der Wellschlauch 31 soll demgemäß in axialer Richtung weniger elastisch sein, als die Federvorrichtung 25 bzw. die Federwendel 27.

Die Befestigungsvorrichtung 32 ist ausgebildet, die Leitungsführungsvorrichtung 16 an einem Glied G1-G7 des Roboterarms 5, insbesondere an dem Glied G4 zu befestigen.

Mittels der Verstellvorrichtung 30, insbesondere mittels des Wellschlauches 31 ist der Gegenlagersitz 28, bzw. sind der Kugelgelenksring 28a und der Kugelgelenkssitz 29 bezüglich der Befestigungsvorrichtung 32 beweglich gelagert. Die Verstellvorrichtung 30 wird demgemäß zumindest weitgehend oder sogar vollständig durch Querkräfte bewegt, welche insbesondere durch eine Zugkraft an dem freien Ende der Versorgungsleitung 17, beispielsweise bei einer Drehung des Befestigungsflansches 11 des Industrieroboters 1, an dem das freie Ende der Versorgungsleitung 17 festgelegt ist, quer zur Auszugsrichtung A auftreten. Die Verstellvorrichtung 30 ist dabei ausgebildet, zumindest tendenziell die Leitungsführungsvorrichtung 16, insbesondere die Federvorrichtung 25 in Richtung der Auszugsrichtung A zu schwenken oder zu drehen. Sowohl eine Bewegung der Verstellvorrichtung 30 aus einer Grundposition in eine Auslenkungsposition kann alleine aufgrund dieser Querkräfte erfolgen, als auch eine Bewegung der Verstellvorrichtung 30 aus der Auslenkungsposition in die Grundposition kann alleine aufgrund dieser Querkräfte erfolgen. Alternativ kann eine Bewegung der Verstellvorrichtung 30 aus der Auslenkungsposition in die Grundposition durch eine separate Rückstellkraft erfolgen. Zur Erzeugung einer solchen Rückstellkraft kann erfindungsgemäß eine Rückstelleinrichtung 31.1 vorgesehen sein. Die Rückstelleinrichtung 31.1 kann beispielsweise ein separates Federglied aufweisen, das ausgebildet ist, den Gegenlagersitz 28 aus einer ausgelenkten Position des Gegenlagersitzes 28 in eine Grundposition des Gegenlagersitzes 28 zurückzuführen. Alternativ kann beispielsweise der Wellschlauch 31 der Verstellvorrichtung 30 federelastisch sein, um den Gegenlagersitz 28 aus einer ausgelenkten Position des Gegenlagersitzes 28 in eine Grundposition des Gegenlagersitzes 28 zurückzuführen. In diesem Falle kann also der Wellschlauch 31 aus einem Material hergestellt sein und/oder eine Gestalt aufweisen, wodurch der Wellschlauch 31 eine inhärente Rückstelleigenschaft, insbesondere Elastizität erhält. Der Wellschlauch 31 kann beispielsweise aus Kunststoff oder aus Metall hergestellt sein.

Die Rückstelleinrichtung 31.1 oder das separate Federglied, bzw. inhärent der Wellschlauch 31, kann zumindest in Auszugsrichtung der Versorgungsleitung 17 eine Federsteifigkeit aufweisen, die größer ist, als eine Federsteifigkeit der Federvorrichtung 25 bzw. der Federwendel 27. Der Wellschlauch 31 soll dadurch in Richtung seiner axialen Erstreckung zumindest weitgehend starr ausgebildet sein, jedoch dabei in einer zu seiner axialen Erstreckung senkrechten Richtung, bzw. in Querrichtung flexibel ausgebildet sein.

Die Rückstelleinrichtung 31.1 oder das separate Federglied, bzw. inhärent der Wellschlauch 31, soll dabei in Auszugsrichtung A der Versorgungsleitung 17 zumindest weitergehend oder vollständig starr ausgebildet sein, wo hingegen die Rückstelleinrichtung 31.1 in wenigstens einer zur Auszugsrichtung A der Versorgungsleitung 17 senkrechten Richtung, bzw. in Querrichtung beweglich, insbesondere federelastisch beweglich ausgebildet sein soll.

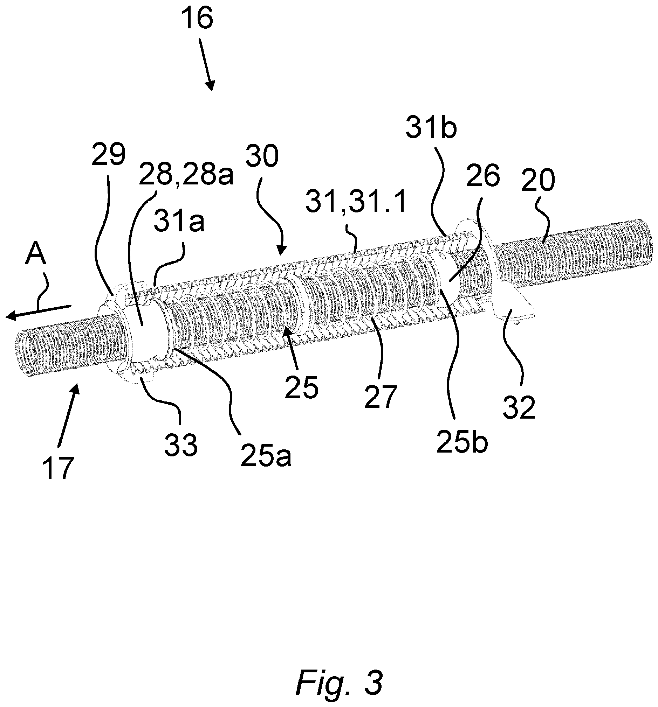

Der mit der Versorgungsleitung 19 fest verbundene Federvorrichtungssitz 26 ist in axialer Längserstreckung, d.h. in Auszugsrichtung A koaxial zum Wellschlauch 31 verstellbar innerhalb des Wellschlauches 31 geführt. Der Federvorrichtungssitz 26 kann dazu an seinem Außenmantel eine Gleitfläche aufweisen, welche ausgebildet ist, entlang der Innenmantelwand des Wellschlauches 31 in axialer Richtung zu gleiten. Wenn also die Versorgungsleitung 19 in Auszugsrichtung A herausgezogen wird, dann wird der Federvorrichtungssitz 26 aus der in Fig. 3 gezeigten hinteren Position nach vorne bewegt. Die Innenmantelwand des Wellschlauches 31 bildet insoweit eine Gleitschiebeführung für der Federvorrichtungssitz 26.

Im Falle des in den Figuren 2 bis 4 dargestellten Ausführungsbeispiels der Leitungsführungsvorrichtung 16 wird die Rückstelleinrichtung 31.1 also durch eine flexible Ausgestaltung des Wellschlauches 31 gebildet.

Das freie Wellschlauchende 31a des Wellschlauches 31 ist im Falle des vorliegenden Ausführungsbeispiels außenumfangsseitig mit einer Stoßdämpfungseinrichtung 33 versehen. Die Stoßdämpfungseinrichtung 33 ist hier einteilig mit dem Kugelgelenkssitz 29 ausgebildet. Die Stoßdämpfungseinrichtung 33 bzw. der Kugelgelenkssitz 29 kann dabei ausgebildet sein, das freie Wellschlauchende 31a und/oder den Gegenlagersitz 28 vor Beschädigung zu schützen, wenn es während eine Bewegung der Leitungsführungsvorrichtung 16 beispielsweise gegen ein Glied G1-G7 des Industrieroboters 1 schlägt. Die Stoßdämpfungseinrichtung 33 bzw. der Kugelgelenkssitz 29 kann dazu aus einem elastischen Kunststoff hergestellt sein. Die Stoßdämpfungseinrichtung 33 bzw. der Kugelgelenkssitz 29 kann insbesondere zum nachträglichen Austauschen bzw. Ersetzen ausgebildet sein.

## Patentansprüche

1. Leitungsführungsvorrichtung zum Führen mindestens einer Versorgungsleitung (19) entlang eines Roboterarms (5), aufweisend:
- eine Versorgungsleitung (17),
- eine Federvorrichtung (25), die ausgebildet ist, die Versorgungsleitung (17) mittels Federkraft selbsttätig aus einem ausgezogenen Zustand der Versorgungsleitung (17) in einen eingezogenen Zustand der Versorgungsleitung (17) zurückzuführen, und die einen in Auszugsrichtung (A) der Versorgungsleitung (17) vorderen Endabschnitt (25a) und einen in Auszugsrichtung (A) der Versorgungsleitung (17) hinteren Endabschnitt (25b) aufweist,
- einen mit der Versorgungsleitung (17) fest verbundenen Federvorrichtungssitz (26), an dem der hintere Endabschnitt (25b) der Federvorrichtung (25) gelagert ist,
- einen Gegenlagersitz (28), an dem der vordere Endabschnitt (25a) der Federvorrichtung (25) gelagert ist,
- eine Befestigungsvorrichtung (32), die ausgebildet ist, die Leitungsführungsvorrichtung (17) an einem Glied (G1-G7) des Roboterarms (5) zu befestigen, und
- eine den Gegenlagersitz (28) tragende Verstellvorrichtung (30), die ausgebildet ist, den Gegenlagersitz (28) bezüglich der Befestigungsvorrichtung (32) beweglich zu lagern, **dadurch gekennzeichnet, dass** die Verstellvorrichtung (30) eine Rückstelleinrichtung (31.1) aufweist, die ausgebildet ist, den Gegenlagersitz (28) aus einer ausgelenkten Position des Gegenlagersitzes (28) in eine Grundposition des Gegenlagersitzes (28) zurückzuführen.

2. Leitungsführungsvorrichtung nach Anspruch 1, bei der die Rückstelleinrichtung (31.1) ausgebildet ist, den Gegenlagersitz (28) mittels Federkraft selbsttätig aus einer ausgelenkten Position des Gegenlagersitzes (28) in eine Grundposition des Gegenlagersitzes (28) zurückzuführen.

3. Leitungsführungsvorrichtung nach Anspruch 1 oder 2, **dadurch gekennzeichnet, dass** die Rückstelleinrichtung (31.1) zumindest in Auszugsrichtung (A) der Versorgungsleitung (17) eine Federsteifigkeit aufweist, die größer ist, als eine Federsteifigkeit der Federvorrichtung (25) .

4. Leitungsführungsvorrichtung nach Anspruch 3, **dadurch gekennzeichnet, dass** die Rückstelleinrichtung (31.1) in Auszugsrichtung (A) der Versorgungsleitung (17) zumindest weitergehend oder vollständig starr ausgebildet ist.

5. Leitungsführungsvorrichtung nach Anspruch 3 oder 4, **dadurch gekennzeichnet, dass** die Rückstelleinrichtung (31.1) in wenigstens einer zur Auszugsrichtung (A) der Versorgungsleitung (17) senkrechten Richtung beweglich, insbesondere federelastisch beweglich ausgebildet ist.

6. Leitungsführungsvorrichtung nach einem der Ansprüche 1 bis 5, bei der die Verstellvorrichtung (30) von einem die Federvorrichtung (25) umgebenden Wellschlauch (31) gebildet wird, der ein mit der Befestigungsvorrichtung (32) verbundenes festes Wellschlauchende (31b) aufweist und ein dem festen Wellschlauchende (31b) gegenüberliegendes freies Wellschlauchende (31a) aufweist, an dem der Gegenlagersitz (28) befestigt ist.

7. Leitungsführungsvorrichtung nach Anspruch 6, **dadurch gekennzeichnet, dass** der mit der Versorgungsleitung (17) fest verbundene Federvorrichtungssitz (26) in axialer Längserstreckung des Wellschlauches (31) verstellbar innerhalb des Wellschlauches (31) geführt ist.

8. Leitungsführungsvorrichtung nach Anspruch 6 oder 7, bei der die Rückstelleinrichtung (31.1) durch eine flexible Ausgestaltung des Wellschlauches (31) gebildet wird.

9. Leitungsführungsvorrichtung nach einem der Ansprüche 6 bis 8, **dadurch gekennzeichnet, dass** das freie Wellschlauchende (31a) des Wellschlauches (31) außenumfangsseitig mit einer Stoßdämpfungseinrichtung (33) versehen ist.

10. Industrieroboter (1) aufweisend eine Robotersteuerung (18), die ausgebildet und/oder eingerichtet ist, ein Roboterprogramm auszuführen, sowie aufweisend einen Roboterarm (5) mit Gelenken (A1-A6), die gemäß des Roboterprogramms automatisiert oder in einem Handfahrbetrieb automatisch verstellbar sind, und aufweisend wenigstens eine Leitungsführungsvorrichtung (16) nach einem der Ansprüche 1 bis 9.

## Claims

1. Cable guide device for guiding at least one power supply line (19) along a robot arm (5) comprising:
- a power supply line (17),
- a spring system (25) which is configured to automatically return the power supply line (17) by spring force from an extended state of the power supply line (17) to a retracted state of the power supply line (17), the spring system including a front end section (25a) in the direction of extension (A) of the power supply line (17) and a rear end section (25b) in the direction of extension (A) of the power supply line (17),
- a spring system seat (26) securely connected to the power supply line (17), on which spring system seat the rear end section (25b) of the spring system (25) is mounted,
- a counter bearing seat (28), on which the front end section (25a) of the spring system (25) is mounted,
- a fastening device (32) which is configured to fasten the cable guide device (17) onto a link (G1-G7) of the robot arm (5) and
- an adjustment device (30) supporting the counter bearing seat (28), which is designed to mount the counter bearing seat (28) to be movable relative to the fastening device (32), **characterised in that** the adjustment device (30) comprises a resetting device (31.1), which is designed to return the counter bearing seat (28) from a deflected position of the counter bearing seat (28) into a basic position of the counter bearing seat (28).

2. Cable guide device according to claim 1, wherein the resetting device (31.1) is designed to automatically return the counter bearing seat (28) by means of spring force from a deflected position of the counter bearing seat (28) into a base position of the counter bearing seat (28).

3. Cable guide device according to claim 1 or 2, **characterised in that** the resetting device (31.1) has a spring constant that is greater than a spring constant of the spring system (25), at least in the extension direction (A) of the power supply line (17).

4. Cable guide device according to claim 3, **characterised in that** the resetting device (31.1) is designed to be at least substantially or completely rigid in the extension direction (A) of the power supply line (17).

5. Cable guide device according to claim 3 or 4, **characterised in that** the resetting device (31.1) is designed to be movable in at least one direction perpendicular to the extension direction (A) of the power supply line (17), in particular to be spring-elastically movable.

6. Cable guide device according to any of claims 1 to 5, wherein the adjustment device (30) is formed by a corrugated hose (31) which surrounds the spring system (25), which corrugated hose has a corrugated hose end (31b) connected securely to the fastening device (32) and a free corrugated hose end (31a) opposite the fixed corrugated hose end (31b) on which free corrugated hose end the counter bearing seat (28) is secured.

7. Cable guide device according to claim 6, **characterised in that** the spring system seat (26) connected securely to the power supply line (17) is guided adjustably inside the corrugated hose (31) in axial longitudinal extension of the corrugated hose (31) .

8. Cable guide device according to claim 6 or 7, wherein the resetting device (31.1) is formed by a flexible design of the corrugated hose (31).

9. Cable guide device according to any of claims 6 to 8, **characterised in that** the free corrugated hose end (31a) of the corrugated hose (31) is provided on the outer circumference with a shock-absorbing device (33).

10. Industrial robot (1) comprising a robot controller (18) which is designed and/or configured to execute a robot program, and comprising a robot arm (5) including joints (A1-A6) which are automated according to the robot program or are automatically adjustable in a manual operating mode and comprising at least one cable guide device (16) according to any of claims 1 to 9.

## Revendications

1. Dispositif de guidage de ligne pour guider au moins une ligne d'alimentation (17) le long d'un bras de robot (5), comprenant :
- une ligne d'alimentation (17),
- un dispositif à ressort (25) qui est réalisé pour ramener automatiquement la ligne d'alimentation (17) au moyen d'une force élastique depuis un état étiré de la ligne d'alimentation (17) jusque dans un état rétracté de la ligne d'alimentation (17), et qui présente un tronçon d'extrémité avant (25a) dans la direction d'extension (A) de la ligne d'alimentation (17) et une tronçon d'extrémité arrière (25b) dans la direction d'extension (A) de la ligne d'alimentation (17),
- un siège de dispositif à ressort (26) relié de manière fixe à la ligne d'alimentation (17), sur lequel le tronçon d'extrémité arrière (25b) du dispositif à ressort (25) est monté,
- un siège de butée (28) sur lequel le tronçon d'extrémité avant (25a) du dispositif à ressort (25) est monté,
- un dispositif de fixation (32) qui est réalisé pour fixer le dispositif de guidage de ligne (17) à un membre (G1-G7) du bras de robot (5), et
- un dispositif de réglage (30) portant ledit siège de butée (28) et adapté pour supporter de manière mobile ledit siège de butée (28) par rapport audit dispositif de montage (32), **caractérisé en ce que** le dispositif de déplacement (30) présente un dispositif de rappel (31.1) qui est réalisé pour ramener le siège de butée (28) depuis une position déviée du siège de butée (28) jusque dans une position de base du siège de butée (28).

2. Dispositif de guidage de ligne selon la revendication 1, dans lequel le dispositif de rappel (31.1) est réalisé pour ramener automatiquement le siège de butée (28) au moyen d'une force élastique depuis une position déviée du siège de butée (28) jusque dans une position de base du siège de butée (28).

3. Dispositif de guidage de ligne selon la revendication 1 ou 2, **caractérisé en ce que** le dispositif de rappel (31.1) présente au moins en direction d'extension (A) de la ligne d'alimentation (17) une rigidité élastique qui est supérieure à une rigidité élastique du dispositif à ressort (25).

4. Dispositif de guidage de ligne selon la revendication 3, **caractérisé en ce que** le dispositif de rappel (31.1) est réalisé au moins en grande partie ou totalement rigide en direction d'extension (A) de la ligne d'alimentation (17).

5. Dispositif de guidage de ligne selon la revendication 3 ou 4, **caractérisé en ce que** le dispositif de rappel (31.1) est réalisé mobile, en particulier mobile de manière élastique dans au moins une direction perpendiculaire à la direction (A) de la ligne d'alimentation (17).

6. Dispositif de guidage de ligne selon l'une quelconque des revendications 1 à 5, dans lequel le dispositif de réglage (30) est formé par un tube ondulé (31) entourant le dispositif à ressort (25), qui présente une extrémité fixe (31b) de tube ondulé fixe reliée au dispositif de fixation (32) et une extrémité libre (31a) de tube ondulé opposée à l'extrémité fixe (31b) de tube ondulé, sur laquelle le siège de butée (28) est fixé.

7. Dispositif de guidage de ligne selon la revendication 6, **caractérisé en ce que** le siège de dispositif à ressort (26) relié de manière fixe à la ligne d'alimentation (17) est guidé de manière réglable à l'intérieur du tube ondulé (31) en direction longitudinale axiale du tube ondulé (31).

8. Dispositif de guidage de ligne selon la revendication 6 ou 7, dans lequel le dispositif de rappel (31.1) est formé par une configuration flexible du tube ondulé (31).

9. Dispositif de guidage de ligne selon l'une quelconque des revendications 6 à 8, **caractérisé en ce que** l'extrémité libre (31a) du tube ondulé (31) est pourvue d'un dispositif d'amortissement de chocs (33) sur sa périphérie extérieure.

10. Robot industriel (1) présentant une commande de robot (18) qui est réalisée et/ou structurée pour exécuter un programme de robot, présentant en outre un bras de robot (5) avec des articulations (A1-A6) qui sont automatisées selon le programme de robot ou automatiquement réglables en fonctionnement manuel, et présentant au moins un dispositif de guidage de ligne (16) selon l'une des revendications 1 à 9.
